# EUROPEAN PATENT APPLICATION

(11) **EP 4 807 493 A1**
(43) Date of publication of application: **16.09.2026**
(21) Application number: 25818127.0
(22) Date of filing: 21.11.2025
(51) Int. Cl.: G06F 1/16, H04R 1/28, H04M 1/03

(54) **ELECTRONIC APPARATUS COMPRISING SPEAKER**

(30) Priority: 14.01.2025 KR 20250005143; 19.05.2025 KR 20250064466
(71) Applicant: Samsung Electronics Co., Ltd, Suwon-si, Gyeonggi-do 16677 (KR)
(72) Inventor: SON, Yooha, Suwon-si, Gyeonggi-do 16677 (KR); LIM, Changok, Suwon-si, Gyeonggi-do 16677 (KR); KIM, Donghee, Suwon-si, Gyeonggi-do 16677 (KR); LEE, Donghyeong, Suwon-si, Gyeonggi-do 16677 (KR)
(74) Representative: Gulde & Partner
(86) International application number: PCT/KR2025/019513
(87) International publication number: WO 2026/155350

(57) **Abstract**

An electronic device includes a display; a housing assembly including a sidewall forming an exterior surface of the electronic device and an internal structure that is integrally formed with or fixed to the sidewall and configured to support the display; and a rear plate disposed on an opposite side of the display. The housing assembly includes a hole formed to pass through a portion of the internal structure and a portion of the sidewall. The hole includes a first conduit formed to extend from an outer side of the sidewall and a second conduit formed to extend from an inner side of the housing assembly and configured to communicate with the first conduit. The internal structure includes a rib extending from an inner end of the first conduit toward the second conduit. The rib is positioned to obstruct a direct line of sight through the hole from the outer side of the sidewall.

## Description

### [Technical Field]

Various embodiments of the disclosure relate to an electronic device including a speaker.

### [Background Art]

Advancing information communication and semiconductor technologies accelerate the spread and use of various electronic devices. Recent electronic devices are being developed to carry out communication while carried on.

Electronic device may refer to a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc.

For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

An electronic device according to an embodiment includes a display, a housing assembly including a sidewall forming an outer surface of the electronic device and an internal structure that is integrally formed with or fixed to the sidewall and configured to support the display, and a rear plate disposed on an opposite side of the display. The housing assembly includes a hole formed to pass through a portion of the internal structure and a portion of the sidewall. The hole includes a first conduit formed to extend from an outer side of the sidewall and a second conduit formed to extend from an inner side of the housing assembly and configured to communicate with the first conduit. The internal structure includes a rib extending from an inner end of the first conduit toward the second conduit, and the rib is positioned to obstruct a direct line of sight through the hole from the outer side of the sidewall.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 is a block diagram illustrating an electronic device in a network environment according to an embodiment.
FIG. 2 is a front exploded perspective view illustrating an electronic device according to an embodiment.
FIG. 3 is a rear perspective view illustrating an electronic device according to an embodiment.
FIG. 4 is a front exploded perspective view illustrating an electronic device according to an embodiment.
FIG. 5 is a rear exploded perspective view illustrating an electronic device according to an embodiment.
FIG. 6 is a perspective view illustrating a state before a substrate on which a speaker is disposed is assembled to a housing assembly in an electronic device according to an embodiment.
FIG. 7 is a plan view illustrating a state in which a substrate on which a speaker is disposed is assembled to a housing assembly in an electronic device according to an embodiment.
FIG. 8 is a perspective view taken along line A-A of FIG. 7.
FIG. 9 is a cross-sectional view taken along line A-A of FIG. 7.
FIG. 10 is a view illustrating a housing assembly of an electronic device according to an embodiment based on view from below.
FIGS. 11 to 13 are enlarged cross-sectional views illustrating a portion of a hole of a housing assembly according to various embodiments.
FIGS. 14A and 14B are example views illustrating a process of manufacturing a hole of a housing assembly according to an embodiment.
FIG. 15 is an example view illustrating an effect of a hole structure of a housing assembly according to an embodiment.
FIG. 16 is an experimental example illustrating speaker output performance of a hole structure of a housing assembly according to an embodiment.
FIG. 17 is a cross-sectional view illustrating a hole structure of a housing assembly according to an embodiment.

Reference may be made to the accompanying drawings in the following description, and specific examples that may be practiced are shown as examples within the drawings. Other examples may be utilized and structural changes may be made without departing from the scope of the various examples.

### [Mode for the Invention]

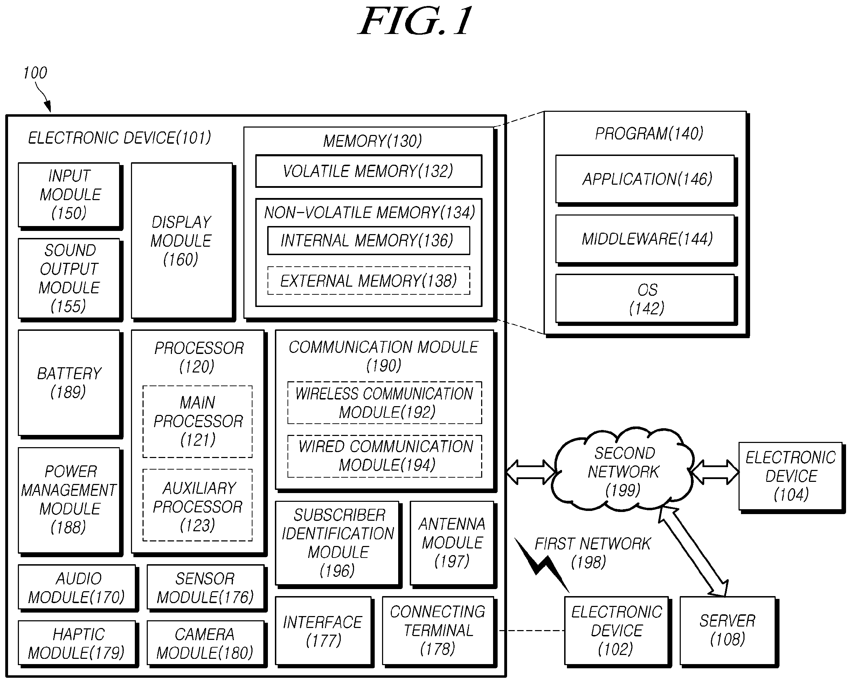

Various embodiments of the disclosure are merely exemplified herein with reference to FIGS. 1 to 17, to describe the principle of the disclosure, and should not be interpreted as limiting the scope of the disclosure. Those skilled in the art will understand that the principle of the disclosure may be implemented in any appropriately disposed system or device.

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

FIG. 1 is a block diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{TM}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a PCB, an RFIC disposed on a first side (e.g., the bottom surface) of the PCB, or adjacent to the first side and capable of supporting a designated high-frequency band (e.g., the mmWave band), and a plurality of antennas (e.g., array antennas) disposed on a second side (e.g., the top or a lateral side) of the PCB, or adjacent to the second side and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

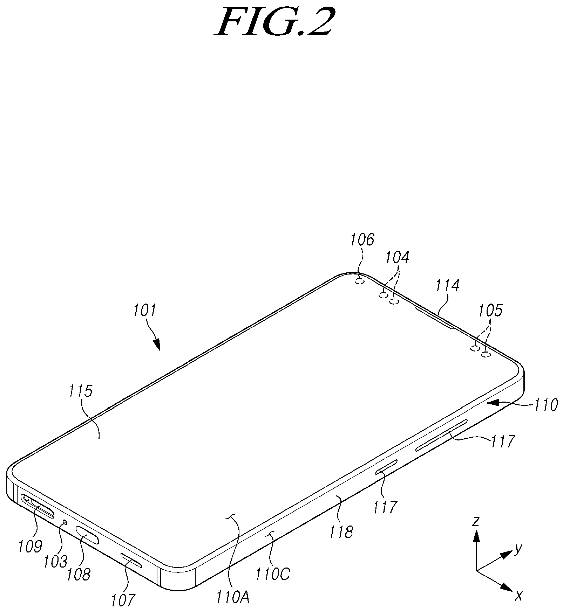

FIG. 2 is a front exploded perspective view illustrating an electronic device according to an embodiment.

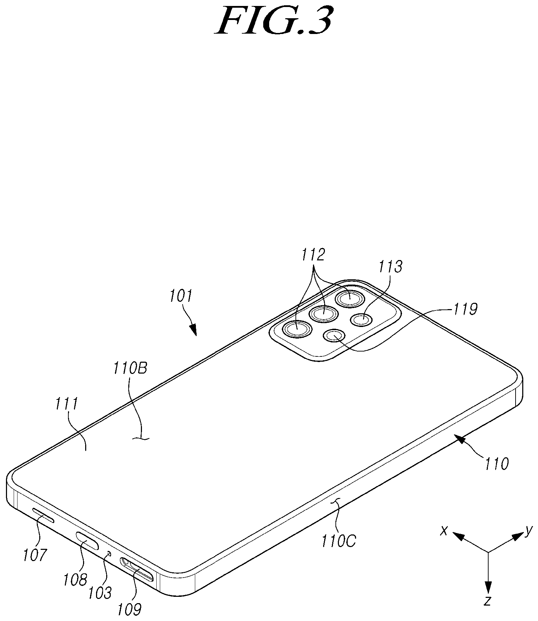

FIG. 3 is a rear perspective view illustrating an electronic device according to an embodiment.

All features, components, and/or arrangement relationships between components illustrated in FIGS. 2 and 3 may be included alone or in combination with the features, components, and arrangement relationships between components described in other drawings of the disclosure. Likewise, all features, components, and/or arrangement relationships between components described in connection with FIGS. 1 and 4 to 17 may be included alone or in combination with the features, components, and arrangement relationships between components described in connection with FIGS. 2 and 3.

The components of the electronic device 101 of FIGS. 2 and 3 may be identical in whole or part to the components of the electronic device 101 of FIG. 1.

Referring to FIGS. 2 and 3, according to an embodiment, an electronic device 101 (e.g., the electronic device 101 of FIG. 1) may include a housing 110 including a first side (or front side) 110A, a second side (or rear side) 110B, and a lateral side 110C surrounding a space between the first side 110A and the second side 110B. According to an embodiment, the housing 110 may denote a structure forming the first side 110A of FIG. 2, the second side 110B of FIG. 3, and some of the lateral sides 110C.

According to an embodiment, at least part of the first side 110A may have a substantially transparent front plate 102 (e.g., a glass plate or polymer plate including various coat layers). The second side 110B may be formed of a substantially opaque rear plate 111. The rear plate 111 may be formed of, e.g., laminated or colored glass, ceramic, polymer, metal (e.g., aluminum, stainless steel (STS), or magnesium), or a combination of at least two thereof. The lateral side 110C may be formed by a side structure (or a "side bezel structure") 118 that couples to the front plate 102 and the rear plate 111 and includes a metal and/or polymer. In an embodiment, the rear plate 111 and the side structure 118 may be integrally formed together and include the same material (e.g., a metal, such as aluminum).

According to an embodiment, the front plate 102 may include area(s) that bend from at least a portion of an edge toward the rear plate 111 and seamlessly extend. For example, only one of the areas of the front plate 102 (or the rear plate 111), which bend to the rear plate 111 (or front plate 102) and extend may be included in one edge of the first side 110A. According to an embodiment, the front plate 102 or rear plate 111 may be substantially flat and, in this case, may not include an area bending and extending. In case that an area bending and extending is included in the front plate 102 or rear plate 111, the thickness of the electronic device 101 at the portion including the area bending and extending may be smaller than the thickness of the rest.

According to an embodiment, the electronic device 101 may include at least one of a display 115, an audio module (e.g., the microphone hole 103, the external speaker hole 107, and the phone receiver hole 114), a sensor module (e.g., the first sensor module 104, the second sensor module (not illustrated), or the third sensor module 119), a camera module (e.g., the first camera device 105, the second camera device 112, or the flash 113), a key input device 117, a light emitting device 106, and a connector hole (e.g., the first connector hole 108 or the second connector hole 109). In an embodiment, the electronic device 101 may exclude at least one (e.g., the key input device 117 or the light emitting device 106) of the components or may add other components.

The display 115 may output a screen or be visually exposed through a significant portion of the first side 110A (e.g., the front plate 102), for example. In an embodiment, at least a portion of the display 115 may be visually exposed through the front plate 102 forming the first side 110A, or through a portion of the lateral side 110C (e.g., edge display). In an embodiment, the edge of the display 115 may be formed to be substantially the same in shape as an adjacent outer edge of the front plate 102. In an embodiment (not illustrated), the interval between the outer edge of the display 115 and the outer edge of the front plate 102 may remain substantially even to give a larger area of visual exposure of the display 115.

According to an embodiment, a recess or an opening may be formed in a portion of the screen display area of the display 115, and the electronic device 101 may include at least one of an audio module (e.g., the phone receiver hole 114), a sensor module (e.g., the first sensor module 104), a camera module (e.g., the first camera device 105), and a light emitting device 106 that are aligned with the recess or the opening. According to an embodiment, at least one of the audio module (e.g., the phone receiver hole 114), sensor module (e.g., the first sensor module 104), camera module (e.g., the first camera device 105), fingerprint sensor (not shown), and light emitting device 106 may be disposed on the rear side of the screen display area of the display 115. According to an embodiment, the display 115 may be coupled with or disposed adjacent to a touch detection circuit, a pressure sensor capable of measuring the strength (pressure) of touches, and/or a digitizer for detecting a magnetic field-type stylus pen.

According to an embodiment, the audio modules 107 and 114 may include a microphone hole 103 and speaker holes (e.g., the external speaker hole 107 and the phone receiver hole 114). A microphone for acquiring external sounds may be disposed in the microphone hole 103. In an embodiment, a plurality of microphones may be disposed to detect (e.g. determine) the direction of the sound. The speaker holes may include an external speaker hole 107 and a phone receiver hole 114. According to an embodiment, the speaker holes (e.g., the external speaker hole 107 and the phone receiver hole 114) and the microphone hole 103 may be implemented (e.g., disposed) as a single hole, or speakers may be included without the speaker holes (e.g., the external speaker hole 107 and the phone receiver hole 114) (e.g., piezo speakers).

According to an embodiment, the sensor module may generate an electrical signal or data value corresponding to an internal operating state or external environmental state of the electronic device 101. The sensor modules may include a first sensor module 104 (e.g., a proximity sensor) and/or a second sensor module (not shown) (e.g., a fingerprint sensor) disposed on the first side 110A of the housing 110 and/or a third sensor module 119 disposed on the second side 110B of the housing 110. The second sensor module (not shown) (e.g., a fingerprint sensor) may be disposed on the second side 110B or lateral side 110C as well as the surface 110A (e.g., the display 115) of the housing 110. The electronic device 101 may further include, e.g., at least one of a gesture sensor, a gyro sensor, an atmospheric pressure sensor, a magnetic sensor, an acceleration sensor, a grip sensor, a color sensor, an infrared sensor, a biometric sensor, a temperature sensor, a humidity sensor, or an illuminance sensor 104.

According to an embodiment, the camera modules may include a first camera device 105 disposed on the first side 110A of the electronic device 101, and a second camera device 112 and/or a flash 113 disposed on the second side 110B. The camera devices (e.g., the first camera device 105 and the second camera device 112) may include one or more lenses, an image sensor, and/or an image signal processor. The flash 113 may include, e.g., a light emitting diode or a xenon lamp. In an embodiment, one or more lenses (an infrared camera, a wide-angle lens, and a telephoto lens) and image sensors may be disposed on one surface of the electronic device 101. In an embodiment, flash 113 may emit infrared light. The infrared light emitted by the flash 113 and reflected by the subject may be received through the third sensor module 119. The electronic device 101 or the processor (e.g., the processor 120 of FIG. 1) of the electronic device 101 may detect depth information about the subject based on the time point in case the infrared light is received from the third sensor module 119.

According to an embodiment, the key input device 117 may be disposed on the lateral side 110C of the housing 110. In an embodiment, the electronic device 101 may exclude all or some of the above-mentioned key input devices 117 and the excluded key input devices 117 may be implemented in other forms, e.g., as soft keys, on the display 115. In an embodiment, the key input device may include the sensor module disposed on the second side 110B of the housing 110.

According to an embodiment, the light emitting device 106 may be disposed on the first side 110A of the housing 110, for example. The light emitting device 106 may provide, e.g., information about the state of the electronic device 101 in the form of light. In an embodiment, the light emitting device 106 may provide a light source that interacts with, e.g., the camera module (e.g., the first camera device 105). The light emitting device 106 may include, e.g., a light emitting diode (LED), an infrared LED, or a xenon lamp.

According to an embodiment, the connector holes (e.g., the first connector hole 108 and the second connector hole 109) may include a first connector hole 108 capable of receiving a connector (e.g., a USB connector) for transmitting and receiving power and/or data with an external electronic device (e.g., the electronic device 102 of FIG. 1), and/or a second connector hole 109 (e.g., a SIM tray hole) for mounting a module related to a communication function.

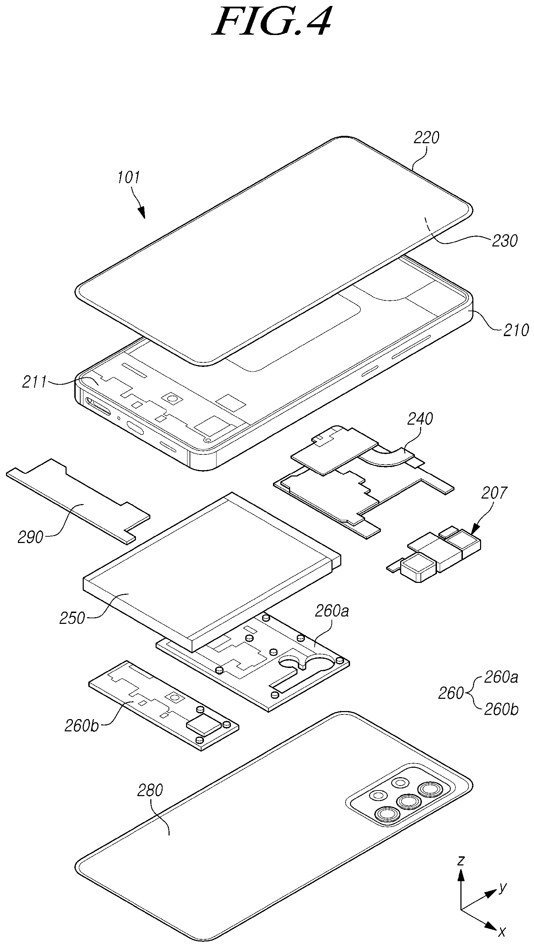

FIG. 4 is a front exploded perspective view illustrating an electronic device according to an embodiment.

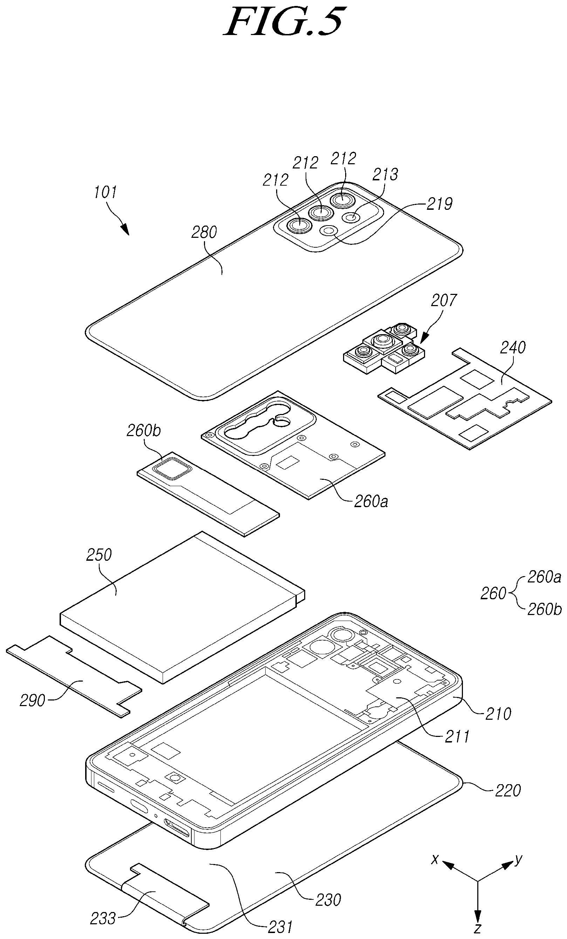

FIG. 5 is a rear exploded perspective view illustrating an electronic device according to an embodiment.

All features, components, and/or arrangement relationships between components illustrated in FIGS. 4 and 5 may be included alone or in combination with the features, components, and arrangement relationships between components described in other drawings of the disclosure. Likewise, all features, components, and/or arrangement relationships between components described in connection with FIGS. 1 to 3 and 6 to 17 may be included alone or in combination with the features, components, and arrangement relationships between components described in connection with FIGS. 4 and 5.

The components of the electronic device 101 of FIGS. 4 and 5 may be identical in whole or part to the components of the electronic device 101 of FIGS. 1 to 3.

Referring to FIGS. 4 and 5, an electronic device 101 (e.g., the electronic device 101 of FIG. 1, 2, or 3) includes a housing 210 (e.g., the housing 110 of FIG. 2), a first supporting member 211 (e.g., a bracket), a front plate 220 (e.g., the front plate 102 of FIG. 2), a display 230 (e.g., the display 115 of FIGS. 2 and 3), a PCB (or a board assembly) 240, a battery 250, a second supporting member 260 (e.g., a rear case), an antenna, a camera assembly 207, and a rear plate 280 (e.g., the rear plate 111 of FIG. 3).

According to an embodiment, the electronic device 101 may exclude at least one (e.g., the first supporting member 211 or the second supporting member 260) of the components or may add other components. At least one of the components of the electronic device 101 may be the same or similar to at least one of the components of the electronic device 101 of FIG. 2 or 3 and no duplicate description is made below.

According to an embodiment, the first supporting member 211 may be disposed inside the electronic device 101 and connected to the housing 210 or may be integrally formed with the housing 210. The first supporting member 211 may be formed of, e.g., a metallic material and/or non-metallic material (e.g., polymer). In case that the first supporting member 211 is formed at least partially of a metallic material, a portion of the housing 210 or the first supporting member 211 may function as an antenna. The display 230 may be joined onto one surface of the first supporting member 211, and the PCB 240 may be joined onto the opposite surface of the first supporting member 211. A processor (e.g., the processor 120 of FIG. 1), memory (e.g., the memory 130 of FIG. 1), and/or an interface (e.g., the interface 177 of FIG. 1) may be mounted on the PCB 240. The processor may include one or more of, e.g., a central processing unit, an application processor, a graphic processing device, an image signal processing, a sensor hub processor, or a communication processor.

According to an embodiment, the first supporting member 211 and the housing 210 may be collectively referred to as a front case or a housing 210. According to an embodiment, the housing 210 may be generally understood as a structure for receiving, protecting, or disposing the PCB 240 or the battery 250. In an embodiment, the housing 210 may be understood as including a structure that the user may visually or tactfully recognize from the outside of the electronic device 101, e.g., the housing 210, the front plate 220, and/or the rear plate 280. In an embodiment, the 'front or rear side of the housing 210' may mean the first side 110A of FIG. 2 or the second side 110B of FIG. 3. In an embodiment, the first supporting member 211 may be disposed between the front plate 220 (e.g., the first side 110A of FIG. 2) and the rear plate 280 (e.g., the second side 110B of FIG. 3) and may function as a structure for placing an electrical/electronic component, such as the PCB 240 or the camera assembly 207.

According to an embodiment, the display 230 may include a display panel 231 and a flexible PCB 233 extending from the display panel 231. It may be understood that the flexible PCB 233 is, e.g., electrically connected to the display panel 231 while at least partially disposed on the rear side of the display panel 231. In an embodiment, reference number '231' may be understood as a protective sheet disposed on the rear side of the display panel. For example, the protective sheet may be understood as a portion of the display panel 231 unless otherwise designated in the detailed description below. In an embodiment, the protective sheet may function as a cushioning structure that absorbs external force (e.g., a low-density elastic material, such as a sponge) or an electromagnetic shielding structure (e.g., a copper sheet). According to an embodiment, the display 230 may be disposed on the inner side of the front plate 220 and, by including a light emitting layer, output a screen through at least a portion of the front plate 220 or the first side 110A of FIG. 2. As mentioned above, the display 230 may output substantially the entire area of the front plate 220 or the first side 110A of FIG. 2.

According to an embodiment, the memory may include, e.g., a volatile or non-volatile memory.

According to an embodiment, the interface may include, e.g., a HDMI, a USB interface, a SD card interface, and/or an audio interface. The interface may electrically or physically connect, e.g., the electronic device 101 with an external electronic device and may include a USB connector, an SD card/multimedia card (MMC) connector, or an audio connector.

According to an embodiment, the second supporting member 260 may include, e.g., an upper supporting member 260a and a lower supporting member 260b. In an embodiment, the upper supporting member 260a, together with a portion of the first supporting member 211, may be disposed to surround the PCB 240. A circuit device (e.g., a processor, a communication module, or memory) implemented in the form of an integrated circuit chip or various electrical/electronic components may be disposed on the PCB 240. According to an embodiment, the PCB 240 may receive an electromagnetic shielding environment from the upper supporting member 260a. In an embodiment, the lower supporting member 260b may be utilized as a structure in which electrical/electronic components, such as a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional PCB (not shown). In this case, the lower supporting member 260b, together with the other part of the first supporting member 211, may be disposed to surround the additional PCB. A speaker module or interface disposed on an additional PCB (not shown) or lower supporting member 260b may be disposed corresponding to the connector hole (e.g., the first connector hole 108 or the second connector hole 109) or the audio module (e.g., the microphone hole 103 or the speaker hole (e.g., the external speaker hole 107 or the phone receiver hole 114)) of FIG. 2.

According to an embodiment, it may be disposed corresponding to the audio module 170 or the connector hole 108 or 109.

According to an embodiment, the battery 250 may be a device (e.g., component) for supplying power to at least one component of the electronic device 101. The battery 189 may include, e.g., a primary cell which is not rechargeable, a secondary cell which is rechargeable, or a fuel cell. At least a portion of the battery 250 may be disposed on substantially the same plane as the PCB 240. The battery 250 may be integrally or detachably disposed inside the electronic device 101.

According to an embodiment, the electronic device 101 may further include a separate sub-circuit board 290 spaced apart from the PCB 240 in the first supporting member 211. The sub-circuit board 290 may be electrically connected with the PCB 240 through a connecting member such as a connecting flexible board or a cable. The sub-circuit board 290 may be electrically connected with electrical components disposed in an end area of the electronic device 101, such as the battery 250 or a speaker, a USB connector, an antenna connector, and/or a sim socket, and may transfer signals and power.

Although not shown, the antenna may include a conductor pattern implemented on the surface of the second supporting member 260 through, e.g., laser direct structuring. In an embodiment, the antenna may include a printed circuit pattern formed on the surface of the thin film. The thin film-type antenna may be disposed between the rear plate 280 and the battery 250. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment of the disclosure, another antenna structure may be formed by a portion or combination of the housing 210 and/or the first supporting member 211.

According to an embodiment, the camera assembly 207 may include at least one camera module. Inside the electronic device 101, the camera assembly 207 may receive at least a portion of the light incident through the optical hole or the camera windows 212, 213, and 219. In an embodiment, the camera assembly 207 may be disposed on the first supporting member 211 in a position adjacent to the PCB 240. In an embodiment, the camera module(s) of the camera assembly 207 may be generally aligned with either one of the camera windows 212, 213, and 219 and be a least partially surrounded by the second supporting member 260 (e.g., the upper supporting member 260a).

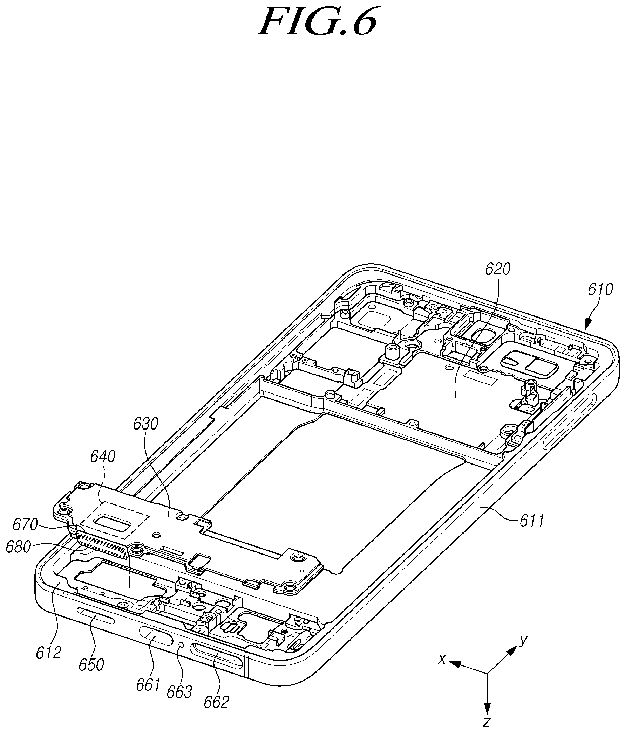

FIG. 6 is a perspective view illustrating a state before a substrate on which a speaker is disposed is assembled to a housing assembly in an electronic device according to an embodiment.

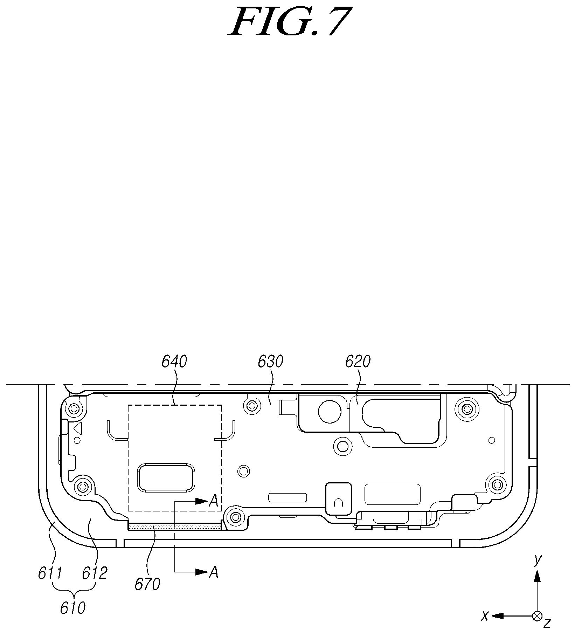

FIG. 7 is a plan view illustrating a state in which a substrate on which a speaker is disposed is assembled to a housing assembly in an electronic device according to an embodiment.

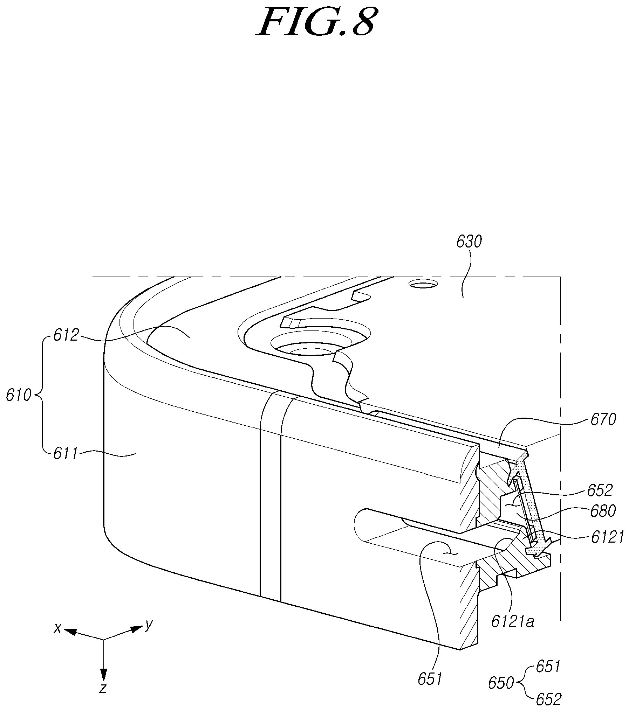

FIG. 8 is a perspective view taken along line A-A of FIG. 7.

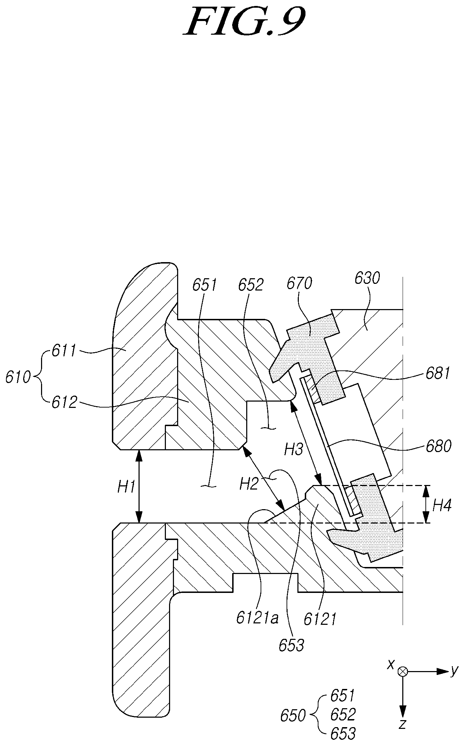

FIG. 9 is a cross-sectional view taken along line A-A of FIG. 7.

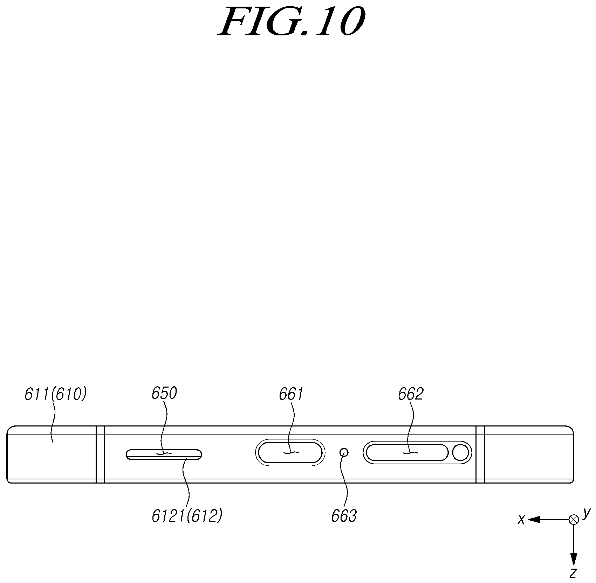

FIG. 10 is a view illustrating a housing assembly of an electronic device according to an embodiment based on view from below.

All features, components, and/or arrangement relationships between components illustrated in FIGS. 6 to 10 may be included alone or in combination with the features, components, and arrangement relationships between components described in other drawings of the disclosure. Likewise, all features, components, and/or arrangement relationships between components described in connection with FIGS. 1 to 5 and 11 to 17 may be included alone or in combination with the features, components, and arrangement relationships between components described in connection with FIGS. 6 to 10.

Referring to FIGS. 6 to 10, an electronic device (e.g., the electronic device 101 of FIGS. 1 and 2) according to an embodiment includes a housing assembly 610, a display (e.g., the display 230 of FIG. 4), a rear plate (e.g., the rear plate 280 of FIG. 4), and a first hole 650 (e.g., the external speaker hole 107 of FIG. 3). The electronic device may further include one or more of a first supporting member 620 (e.g., the first supporting member 211 of FIG. 4), a speaker enclosure 630, a speaker 640, connector holes 661, 662 (e.g., the first connector hole 108, the second connector hole 109 of FIG. 3), a microphone hole 663 (e.g., the microphone hole 103 of FIG. 3), a sealing member 670, or a mesh member 680. The rear plate 280 may be disposed on the opposite side of the display 230. For example, in case that the display 230 forms a front side of the electronic device 101, the rear plate 280 may form a rear side of the electronic device 101.

According to an embodiment, the housing assembly 610 (e.g., the housing 210 of FIG. 4) includes a sidewall 611 and an internal structure 612. The housing assembly 610 may form an exterior of the electronic device 101. The housing assembly 610 may be configured to protect electronic components mounted inside. The housing assembly 610 may provide a space in which internal components are mounted. The rear plate 280 and the display 230 may be disposed to be spaced apart with the sidewall 611 therebetween.

According to an embodiment, the sidewall 611 may constitute a side exterior of the electronic device 101. The sidewall 611 may be formed of various materials such as plastic, metal, alloy, glass, or ceramic. For example, the sidewall 611 may be formed of aluminum or stainless steel alloy material. For example, the sidewall 611 may be formed of polycarbonate or acrylonitrile butadiene styrene (ABS) resin material. The sidewall 611 may be integrally formed as a single component by injection molding, press processing, or welding and joining multiple components.

According to an embodiment, the internal structure 612 may be disposed within the sidewall 611. The internal structure 612 may be disposed to surround or reinforce an inner side of the sidewall 611 to ensure durability of the electronic device 101. The internal structure 612 may be formed to fix and position internal components. The internal structure 612 may be formed of a material such as resin, plastic, or a thermosetting material. For example, the internal structure 612 may be formed by an injection molding or thermoforming process. The internal structure 612 may support a display (e.g., the display 115 of FIG. 2).

According to an embodiment, the housing assembly 610 may have a structure in which the sidewall 611 and the internal structure 612 are integrally formed by directly forming the internal structure 612 inside the sidewall 611 through injection molding. Alternatively, the housing assembly 610 may have a structure in which the internal structure 612 is fixed to an inner wall surface of the sidewall 611 through a coupling member such as an adhesive or a mechanical coupling member.

According to an embodiment, a speaker 640 may be disposed in a speaker enclosure 630. The electronic device 101 may include more than one speaker, but for convenience of description, only one speaker 640 is illustrated in the drawing.

According to an embodiment, the speaker 640 may be disposed at a position adjacent to the first hole 650. The speaker 640 may be disposed at a position adjacent to the second conduit 652. Sound output from the speaker 640 may be transferred to the outside through the first hole 650.

According to an embodiment, the speaker 640 may be supported and/or fixed by the internal structure 612. For example, an assembly position of the speaker 640 may be guided by the shape of the internal structure 612.

According to an embodiment, the sealing member 670 may be disposed between the speaker 640 and the first hole 650. The sealing member 670 may be disposed between the speaker 640 and the second conduit 652. The sealing member 670 may be coupled to the speaker enclosure 630. The sealing member 670 may perform a role of sealing and blocking foreign objects and/or moisture from entering the inside of the electronic device 101 through the first hole 650.

According to an embodiment, the mesh member 680 may be coupled to the sealing member 670. The mesh member 680 may prevent foreign objects or liquid entering through the first hole 650 from directly penetrating into the speaker 640. The mesh member 680 may be composed of a material having a foreign object blocking effect while maintaining air flow and sound transmittance.

According to an embodiment, the first hole 650 may be formed to pass through a lateral side of the housing assembly 610. The first hole 650 may be formed to pass through the sidewall 611 and the internal structure 612. The first hole 650 may be formed to pass through a lower (e.g., -y direction) lateral side of the housing assembly 610, but the position of the first hole 650 is not limited thereto.

According to an embodiment, the first hole 650 may be a passage for transferring sound output from the speaker 640 to the outside. However, without limitation thereto, various holes passing through the housing assembly 610, such as a connector hole, an air vent, or a microphone hole, may have the same structure as the first hole 650.

According to an embodiment, the first hole 650 includes a first conduit 651 and a second conduit 652. The first conduit 651 and the second conduit 652 may be formed through a computer numerical control (CNC) method, but the disclosure is not limited thereto.

According to an embodiment, the first conduit 651 is formed to extend from an outer side of the housing assembly 610. The first conduit 651 may be formed to extend from an outer side of the sidewall 611. The first conduit 651 may be a passage that starts from a portion adjacent to the side exterior of the housing assembly 610 and extends in an inward direction. For example, the first conduit 651 may be formed to pass through the sidewall 611 and a portion of the internal structure 612. The first conduit 651 may be a passage that starts from a portion adjacent to the side exterior of the housing assembly 610, this portion defining an outer end of the first conduit 651 and extends in an inward direction to an inner end of the first conduit 651.

According to an embodiment, the second conduit 652 is formed to extend from an inner side of the housing assembly 610. The second conduit 652 may be formed to extend from an inner side of the internal structure 612. The second conduit 652 may be a passage that starts from a portion adjacent to the side interior of the housing assembly 610 and extends in an outward direction. For example, the second conduit 652 may be formed to pass through a portion of the internal structure 612.

According to an embodiment, the first conduit 651 and the second conduit 652 may be connected to each other to be formed to pass through the housing assembly 610. A portion of a plane (e.g., an x-z plane) perpendicular to an extension direction (e.g., a y-axis direction) of the first conduit 651 may overlap a portion of a plane (e.g., an x-z plane) perpendicular to an extension direction (e.g., a y-axis direction) of the second conduit 652, whereby the first conduit 651 and the second conduit 652 may be connected to each other.

According to an embodiment, the first conduit 651 may extend in a horizontal direction (e.g., a y-axis direction). The first conduit 651 may form a first horizontal path. For example, the first conduit 651 may extend in a direction perpendicular to the sidewall 611. For example, the first conduit 651 may extend in a direction parallel to the display 230. For example, the first conduit 651 may extend in a direction parallel to the rear plate 280.

According to an embodiment, the second conduit 652 may extend in a horizontal direction (e.g., a y-axis direction). The second conduit 652 may form a second horizontal path. For example, the second conduit 652 may extend in a direction perpendicular to the lateral side of the sidewall 611. For example, the second conduit 652 may extend in a direction parallel to the display 230. For example, the second conduit 652 may extend in a direction parallel to the rear plate 280. For example, the second conduit 652 may be positioned between a rib 6121 and the rear plate 280.

According to an embodiment, the first horizontal path of the first conduit 651 may be positioned at a lower height than the second horizontal path of the second conduit 652 with respect to the display 230.

According to an embodiment, the first conduit 651 and the second conduit 652 may be placed or arranged in a staggering manner so that only portions thereof overlap. The first conduit 651 and the second conduit 652 may extend in directions parallel to each other. For example, a horizontal position of the first conduit 651 and a horizontal position of the second conduit 652 may be different. For example, the first conduit 651 may be positioned closer to the display 230 than the second conduit 652.

In a specific embodiment, the staggered relationship between the first conduit 651 and the second conduit 652 may be defined more precisely by their respective central axes. The first conduit 651 extends along a first central axis and the second conduit 652 extends along a second central axis. The central axis of the first conduit 651 is parallel to and offset from the central axis of the second conduit 652, thereby creating the staggered configuration.

According to an embodiment, the first hole 650 may include a connecting conduit 653. The connecting conduit 653 may be a space connecting the first conduit 651 and the second conduit 652. The connecting conduit 653 may be positioned between the first conduit 651 and the second conduit 652. A portion of the connecting conduit 653 may be defined by an inclined side 6121a of the rib 6121 to be described below. A lower side of the connecting conduit 653 may be the inclined side 6121a of the rib 6121. The connecting conduit 653 may connect the first conduit 651 and the second conduit 652 having different heights.

According to an embodiment, the connecting conduit 653 may be a space formed to communicate an overlapping portion of the first conduit 651 and the second conduit 652 based on viewing from an outer side of the first hole 650. The connecting conduit 653 may be referred to as, e.g., an inclined path.

According to an embodiment, the housing assembly 610 includes a rib 6121. The internal structure 612 may include the rib 6121. The rib 6121 may be formed inside the first hole 651. The rib 6121 may be formed to protrude in an inward direction of the first hole 651.

According to an embodiment, the rib 6121 is formed to extend from an end of the first conduit 651 toward the second conduit 652. The rib 6121 may be formed to protrude from a lower side (e.g., a +z direction side) of the first conduit 651.

According to an embodiment, the rib 6121 may include an inclined side 6121a. The inclined side 6121a may be formed to be inclined from the end of the first conduit 651 toward the second conduit 652. For example, an inclination angle of the inclined side 6121a may be 30 degrees to 60 degrees. The inclination angle of the inclined side 6121a is chosen to effectively divert light entering the first conduit 651 away from the direct line of sight of an external observer. An effective range for this angle is between 20 and 80 degrees. A preferred range is between 30 and 60 degrees, which provides a good balance between deflecting light and maintaining the structural integrity of the rib 6121. In a particularly effective embodiment, the angle is between 40 and 50 degrees. It has been found that in case a reflection-reducing feature, such as an anti-reflective layer 1210 or a textured surface 6121a-1, is used, the geometric constraint on the angle is less critical, and an angle of up to 80 degrees may still achieve the desired effect of preventing misleading visual artifacts.

According to an embodiment, the first horizontal path of the first conduit 651 is configured to communicate with the second horizontal path of the second conduit 652 through at least a partially inclined path (e.g., the connecting conduit 653) formed by the inclined side 6121a of the rib 6121. As used herein and in the claims, two elements (e.g., conduits or paths) being 'in communication with' each other means that they are linked via an intermediate structure (e.g., a connecting conduit 653) to form a single, continuous passage. For example, the first conduit 651 and its corresponding first path are in communication with the second conduit 652 and its corresponding second path through at least a partially inclined path (e.g., the connecting conduit 653) formed by the inclined side 6121a of the rib 6121.

In case that the rib 6121 protruding from the lower side of the first conduit 651 is visible from the outside due to light reflection, the user may mistake the rib 6121 for a foreign object. The inclined side 6121a may be formed on the rib 6121 to make it difficult for the user to visually identify the rib 6121 as illustrated in FIG. 10. The inclined side 6121a may minimize the degree of visual identification from the outside by leading light entering from the outside not to be directly reflected in a direction of the user's eyes (e.g., a field of view).

According to an embodiment, a first effective cross-sectional area H1 of the first conduit 651 may be less than or equal to a second effective cross-sectional area H2 of a portion where the first conduit 651 and the second conduit 652 overlap or are connected. Here, the first effective cross-sectional area H1 may refer to an effective cross-sectional area of an open end of the first conduit 651. Here, the first effective cross-sectional area H1 may refer to an effective cross-sectional area of a portion passing through the sidewall 611 in the first conduit 651. Here, the second effective cross-sectional area H2 may refer to an effective cross-sectional area between an edge portion of a step formed by a position difference between the first conduit 651 and the second conduit 652 and the inclined side 6121a of the rib 6121. Here, the second effective cross-sectional area H2 may refer to an effective cross-sectional area of the connecting conduit 653.

According to an embodiment, the first effective cross-sectional area H1 of the first conduit 651 may be less than or equal to a third effective cross-sectional area H3 of the second conduit 652. Here, the third effective cross-sectional area H3 may refer to an effective cross-sectional area of an open end of the second conduit 652. Here, the third effective cross-sectional area H3 may refer to an effective cross-sectional area between an end of the rib 6121 and an upper end of the second conduit 652.

According to an embodiment, the second effective cross-sectional area H2 and the third effective cross-sectional area H3 may be greater than or equal to the first effective cross-sectional area H1. In case that the rib 6121 is formed, by designing the second effective cross-sectional area H2 and the third effective cross-sectional area H3 to be larger than the first effective cross-sectional area H1, speaker sound output performance may be maintained to be substantially the same as before.

According to an embodiment, as illustrated in FIG. 9, at least a portion of the sealing member 670 may be disposed to be hidden by the rib 6121 in case of viewing the first hole 650 from one side of the sidewall 611. Accordingly, the sealing member 670 is not visually exposed from the outside, and aesthetics of the exterior may be improved. In conventional cases, in case that the user looked inside through a speaker hole, the sealing member was identified, causing problems of mistaking it for a foreign object or defect. The electronic device 101 according to an embodiment may solve the problem by providing the rib 6121 structure to block the sealing member 670 from being visually visible from the outside. The rib 6121 serves to hide internal components, such as the sealing member 670 and the mesh member 680, from external view.

According to an embodiment, the mesh member 680 may be coupled to the sealing member 670 by an adhesive 681. In case that the speaker enclosure 630 is mounted on the first supporting member 620 and the internal structure 612, a portion of the adhesive 681 may be compressed in a process of pressing the sealing member 670. Conventionally, in case that the adhesive 681 is compressed, the adhesive 681 flows toward a central portion of the mesh member 680, causing it to be mistakenly interpreted as a foreign object in case that the adhesive 681 was visible from the outside through the first hole 650. In the disclosure, by forming the rib 6121, the adhesive 681 is prevented from being visible from the outside, thereby reducing circumstances where the user mistakes it for a foreign object. For example, at least a portion of the adhesive 681 may be disposed to be hidden by the rib 6121, viewed through the first hole 650 from one side of the sidewall 611.

According to an embodiment, a height (e.g., a z-axis direction length) of the first conduit 651 may be at least 1.2 mm. According to an embodiment, a height H4 of the rib 6121 may be at least 0.6 mm. According to an embodiment, a difference between the height H4 of the rib 6121 and the height of the first conduit 651 may be less than 0.8 mm. The height H4 of the rib 6121 is a parameter for ensuring sufficient obstruction of the view into the device's interior. In general, the height H4 of the rib 6121 may be 0.4 mm or more. A preferred height is 0.6 mm or more, which provides a significant degree of visual obstruction for most internal components. In a specific embodiment, the height of the rib may be in the range of 0.6 mm to 1.0 mm.

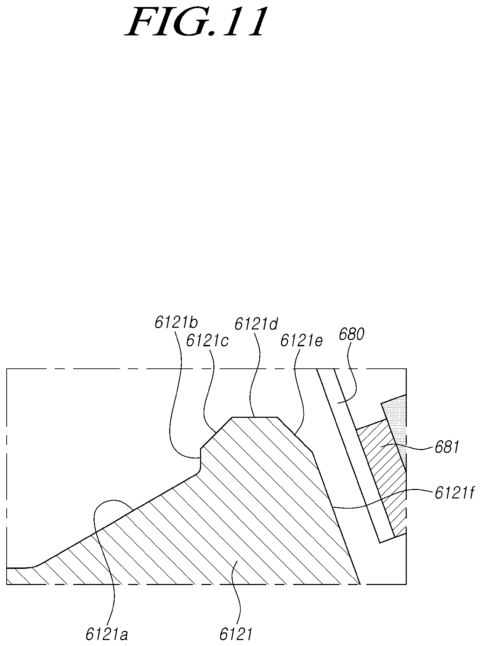

FIGS. 11 to 13 are enlarged cross-sectional views illustrating a portion of a hole of a housing assembly according to various embodiments.

All features, components, and/or arrangement relationships between components illustrated in FIGS. 11 to 13 may be included alone or in combination with the features, components, and arrangement relationships between components described in other drawings of the disclosure. Likewise, all features, components, and/or arrangement relationships between components described in connection with FIGS. 1 to 10 and 14A to 17 may be included alone or in combination with the features, components, and arrangement relationships between components described in connection with FIGS. 11 to 13.

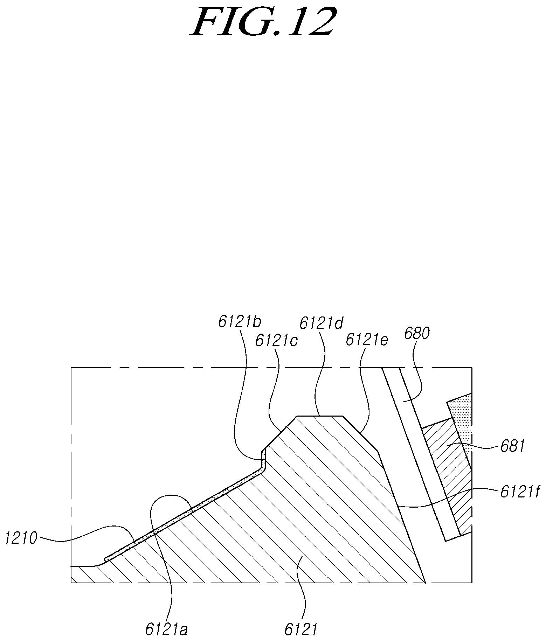

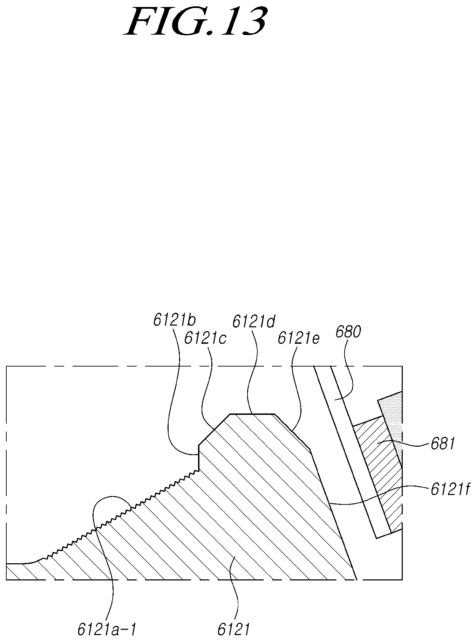

FIGS. 12 and 13 are views illustrating embodiments in which some components are added or modified compared to the embodiment illustrated in FIG. 11.

Referring to FIG. 11, an electronic device (e.g., the electronic device 101 of FIG. 1 or the electronic device 101 of FIG. 2) according to an embodiment may include a rib 6121 (e.g., the rib 6121 of FIG. 9).

According to an embodiment, the rib 6121 may include an inclined side 6121a, a first side 6121b, a first chamfered side 6121c, a second side 6121d, a second chamfered side 6121e, and a third side 6121f. Here, the first chamfered side 6121c and the second chamfered side 6121e may each refer to a side that is chamfered. For example, the rib 6121 may have an edge portion chamfered in a direction toward the second conduit (e.g., the second conduit 652 of FIG. 9). For example, the rib 6121 may have an edge portion of an end side facing the second conduit 652 that is chamfered.

According to an embodiment, the inclined side 6121a may be formed extending from a lower side of the first conduit (e.g., the first conduit 651 of FIG. 9). The inclined side 6121a may be formed to be inclined (e.g., sloped) so that light radiated from the outside through the first hole 650 is not reflected back to the outside. An inclination angle of the inclined side 6121a may be 30 degrees to 60 degrees, but the disclosure is not limited thereto.

According to an embodiment, the first side 6121b may extend from the inclined side 6121a. The first side 6121b may extend in a direction substantially perpendicular to a lower side of the first conduit 651, but the disclosure is not limited thereto.

According to an embodiment, the second side 6121d may form an end side (or upper side) of the rib 6121. The second side 6121d may be perpendicular to the first side 6121b, but the disclosure is not limited thereto.

According to an embodiment, the third side 6121f may be formed to face an opposite direction of the inclined side 6121a. The third side 6121f may be a side facing the mesh member 680. The third side 6121f may be a side facing the sealing member 670. The third side 6121f may be a side closer to the speaker 640 than the inclined side 6121a. The third side 6121f may be formed parallel to the mesh member 680.

According to an embodiment, the first chamfered side 6121c may be formed by chamfering an edge where the first side 6121b and the second side 6121d meet. According to an embodiment, the second chamfered side 6121e may be formed by chamfering an edge where the second side 6121d and the third side 6121f meet. If the edge where the second side 6121d and the third side 6121f meet is not chamfered, the mesh member 680 may be damaged by being pressed against the edge portion due to external impact during use. To prevent damage to the mesh member 680, the edge where the second side 6121d and the third side 6121f meet may be chamfered to form the second chamfered side 6121e.

In a process (e.g., a CNC process) of forming the first conduit 651 and the second conduit 652, fine-sized cutting chips (or processing chips) generated during a hole penetration may accumulate mainly at edge portions. In case that the cutting chips remain at edge portions, these chips may enter the inside of the electronic device and damage electronic components such as a battery. In the disclosure, to prevent such problems, edge portions may be chamfered to form the first chamfered side 6121c and the second chamfered side 6121e.

Referring to FIG. 12, an electronic device (e.g., the electronic device 101 of FIG. 1, the electronic device 101 of FIG. 2) according to an embodiment may include an anti-reflection layer 1210. The anti-reflection layer 1210 may be configured to reduce reflectance of light incident from an external light source.

According to an embodiment, the anti-reflection layer 1210 may be disposed on the inclined side 6121a. For example, a portion of the anti-reflection layer 1210 may be disposed on the first side 6121b.

By disposing the anti-reflection layer 1210 on the inclined side 6121a, an amount of light reflected to the outside of the sidewall 611 may be decreased. As a result, even in case where the user looks into (e.g., observe or view) the first hole (e.g., the first hole 650 of FIG. 9) from the outside, the rib 6121 may not be identified from the outside due to the anti-reflection layer 1210.

As illustrated in FIG. 12, in case that the electronic device 101 includes the anti-reflection layer 1210 disposed on the inclined side 6121a of the rib 6121, an inclination angle of the inclined side 6121a may exceed 60 degrees.

Referring to FIG. 13, a rib 6121 according to an embodiment may include an inclined side 6121a-1. The inclined side 6121a-1 may be textured. The inclined side 6121a-1 of the rib 6121 may have a rough surface. The rough surface of the inclined side 6121a-1 may induce light scattering, thereby reducing a certain amount of light reflected to the outside of the sidewall 611. As a result, even in case where the user looks into the first hole 650, light is scattered by the texture of the inclined side 6121a-1, and the rib 6121 may not be identified from the outside.

As illustrated in FIG. 13, in case that the electronic device 101 includes the rib 6121 having the inclined side 6121a-1 with a textured (or roughened) surface, an inclination angle of the inclined side 6121a-1 may exceed 60 degrees.

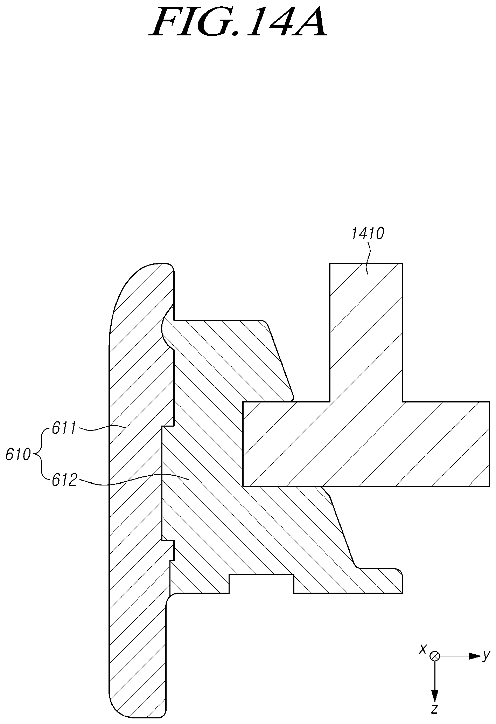

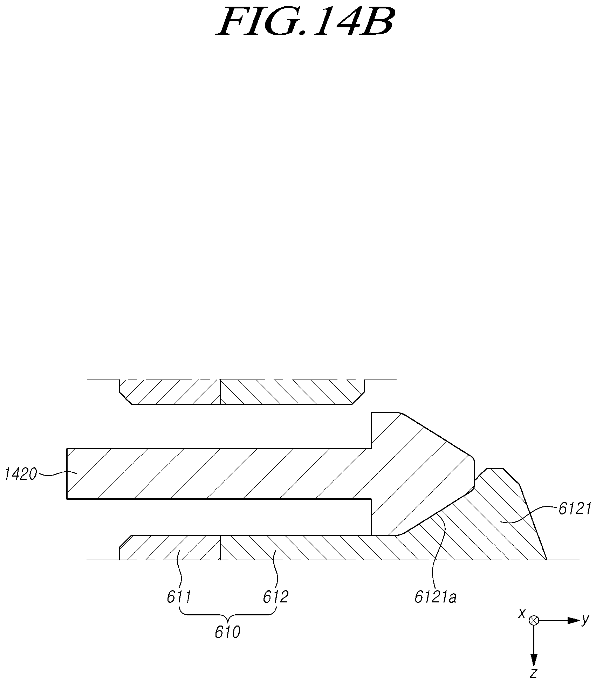

FIGS. 14A and 14B are example views illustrating a process of manufacturing a hole of a housing assembly according to an embodiment.

All features, components, and/or arrangement relationships between components illustrated in FIGS. 14A and 14B may be included alone or in combination with the features, components, and arrangement relationships between components described in other drawings of the disclosure. Likewise, all features, components, and/or arrangement relationships between components described in connection with FIGS. 1 to 13 and 15 to 17 may be included alone or in combination with the features, components, and arrangement relationships between components described in connection with FIGS. 14A and 14B.

FIGS. 14A and 14B are example views illustrating a process of manufacturing a first hole (e.g., the first hole 650 of FIG. 9) according to an embodiment, and the scope of the disclosure is not limited by the illustrated manufacturing method. FIGS. 14A and 14B describe a CNC method, which is a method of precisely cutting and producing a workpiece by controlling a machine tool through computer programming, as an example, but the first hole 650 and rib 6121 structure of the disclosure may also be implemented using an injection mold such as a slide core or multi-core in addition to the CNC method.

Referring to FIGS. 14A and 14B, an electronic device (e.g., the electronic device 101 of FIG. 1, the electronic device 101 of FIG. 2) according to an embodiment may include a housing assembly 610.

According to an embodiment, a process of manufacturing the first hole 650 may include a process of cutting a lateral side of the housing assembly 610 using a first cutting tool 1410. In this process, the first cutting tool 1410 may cut an inner lateral side of the housing assembly 610. A conduit (e.g., the second conduit 652 of FIG. 9) may be formed in the internal structure 612 of the housing assembly 610 through the first cutting tool 1410.

Referring to FIG. 14B, the process of manufacturing the first hole 650 may include a process of cutting a lateral side of the housing assembly 610 using a second cutting tool 1420. In this process, the second cutting tool 1420 may process an outer lateral side of the housing assembly 610. A conduit (e.g., the first conduit 651 of FIG. 9) may be formed in the sidewall 611 and the internal structure 612 of the housing assembly 610 through the second cutting tool 1420.

According to an embodiment, an end (e.g., a cutting edge or tool tip) of the second cutting tool 1420 may have a surface or edge corresponding to the inclined side 6121a of the rib 6121. Due to the shape of the end of the second cutting tool 1420, the inclined side 6121a of the rib 6121 may also be formed together in the process of forming the first conduit 651. An inclination angle of the inclined side 6121a may be adjusted by changing the shape of the end of the second cutting tool 1420.

As illustrated in FIGS. 14A and 14B, the first hole 650 may be formed through two horizontal cutting processes. In case of processing the first hole 650, if it is formed to be inclined with respect to the lateral side of the housing assembly 610, a separate manufacturing device and process for drilling an inclined structure are added, which may increase manufacturing costs. In the disclosure, by processing the first hole 650 by cutting only in a horizontal direction, the process is simplified, and as a result, manufacturing cost and time may be decreased.

FIGS. 14A and 14B exemplarily show a portion of the process of manufacturing the first hole 650 and the rib 6121 according to an embodiment. In this case, the processes illustrated in FIGS. 14A and 14B do not necessarily have to be performed sequentially.

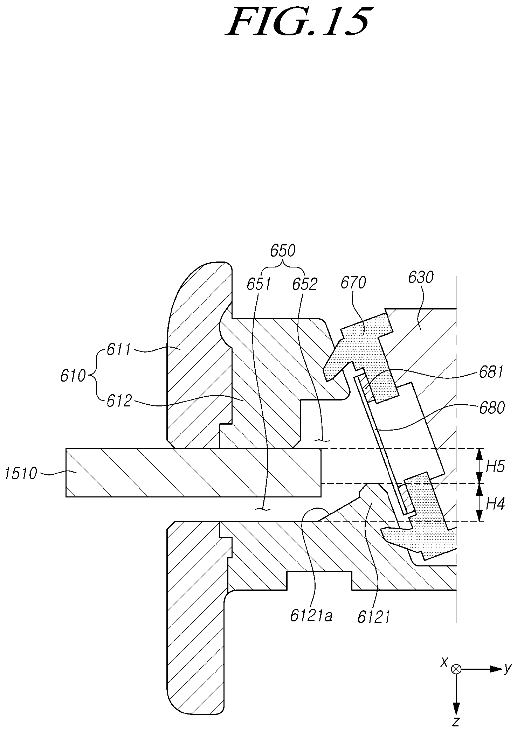

FIG. 15 is an example view illustrating an effect of a hole structure of a housing assembly according to an embodiment.

All features, components, and/or arrangement relationships between components illustrated in FIGS. 1 to 14B may be included alone or in combination with the features, components, and arrangement relationships between components described in other drawings of the disclosure. Likewise, all features, components, and/or arrangement relationships between components described in connection with FIGS. 1 to 14B and 16 and 17 may be included alone or in combination with the features, components, and arrangement relationships between components described in connection with FIG. 15.

FIG. 15 illustrates a case where the user incorrectly inserts a SIM pin 1510 into the first hole 650 in a process of withdrawing (e.g., removing) a SIM tray using the SIM pin 1510.

As illustrated in FIG. 15, conventionally, in case that the user incorrectly inserts the SIM pin 1510 into the first hole 650 (or speaker hole), there was a problem that the mesh member 680 or the sealing member 670 was damaged by the SIM pin 1510. In the disclosure, the rib 6121 blocks entry of the SIM pin 1510, thereby preventing damage to the mesh member 680 or the sealing member 670 from incorrect insertion by the user.

According to an embodiment, a vertical length H5 between an upper end of the first conduit 651 and an end of the rib 6121 may be smaller than a thickness of the SIM pin 1510. For example, in case that the thickness of the SIM pin 1510 is 0.8 mm, the vertical length H5 may be less than 0.8 mm. For example, the vertical length H5 may be 0.6 mm or less. As the vertical length H5 becomes smaller, the mesh member 680 and the sealing member 670 may be protected from tools inserted from the outside, such as the SIM pin 1510. The rib 6121 may serve as a stopper that blocks the SIM pin 1510 from entering inside through the first hole 650. The rib 6121 may be formed to prevent the SIM pin 1510 from approaching the mesh member 680 or the sealing member 670. To provide the technical effect of physically blocking the insertion of a standard tool, such as a SIM pin 1510 which typically has a thickness of approximately 0.8 mm, the vertical length H5 between the upper end of the first conduit 651 and the end of the rib 6121 is critical. This vertical length H5 should be less than the thickness of the tool to be blocked. Accordingly, the vertical length H5 is less than 0.8 mm. To provide a margin of safety, a preferred maximum length for H5 is 0.7 mm. In a particularly robust embodiment, the vertical length H5 is 0.6 mm or less.

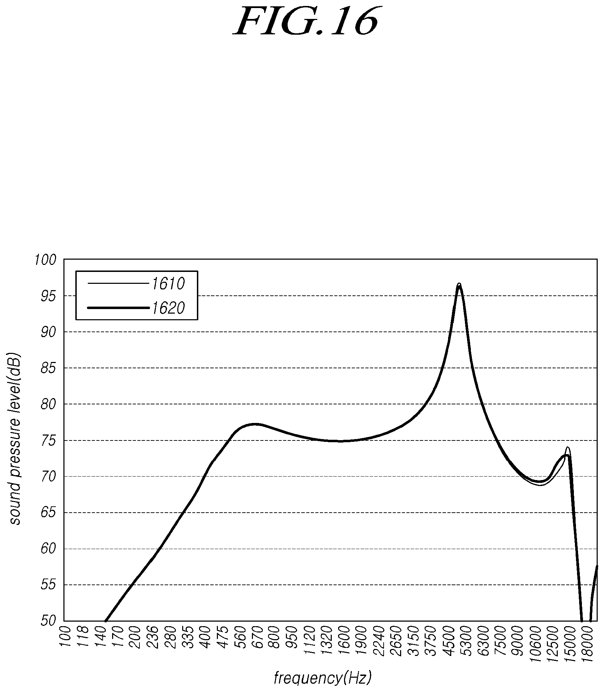

FIG. 16 is an experimental example illustrating speaker output performance of a hole structure of a housing assembly according to an embodiment.

FIG. 16 illustrates a graph measuring sound pressure level (dB) by frequency (Hz) for each speaker. A first acoustic characteristic curve 1610 represents sound pressure level (dB) by frequency (Hz) measured in a speaker (e.g., the speaker 640 of FIG. 6) and first hole (e.g., the first hole 650 of FIG. 9) structure illustrated in FIG. 6. A second acoustic characteristic curve 1620 represents sound pressure level (dB) by frequency (Hz) measured in the speaker 640 and a general hole structure.

As illustrated in FIG. 16, it may be experimentally identified that even in case that the first hole 650 structure of the disclosure is processed as a speaker hole, acoustic characteristics are substantially the same based on comparison to a general speaker hole.

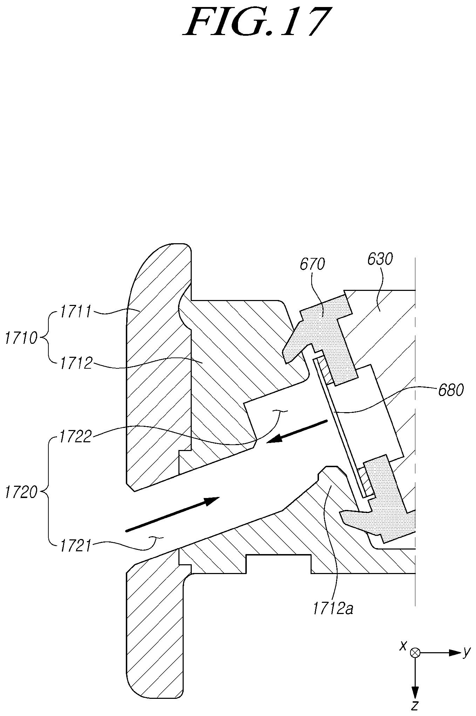

FIG. 17 is a cross-sectional view illustrating a hole structure of a housing assembly according to an embodiment.

All features, components, and/or arrangement relationships between components illustrated in FIG. 17 may be included alone or in combination with the features, components, and arrangement relationships between components described in other drawings of the disclosure. Likewise, all features, components, and/or arrangement relationships between components described in connection with FIGS. 1 to 16 may be included alone or in combination with the features, components, and arrangement relationships between components described in connection with FIG. 17.

Referring to FIG. 17, an electronic device (e.g., the electronic device 101 of FIG. 1, the electronic device 101 of FIG. 2) according to an embodiment may include a housing assembly 1710 and a first hole 1720. The housing assembly 1710 is an embodiment in which some of the components of the housing assembly (e.g., the housing assembly 610 of FIG. 9) of FIG. 9 are modified. The first hole 1720 is an embodiment in which some of the components of the first hole (e.g., the first hole 650 of FIG. 9) of FIG. 9 are modified.

According to an embodiment, the housing assembly 1710 may include a sidewall 1711 and an internal structure 1712. The internal structure 1712 may include a rib 1712a. The rib 1712a may have substantially the same shape as the rib (e.g., the rib 6121 of FIG. 9) of FIG. 9.

According to an embodiment, the first hole 1720 may include a first conduit 1721 and a second conduit 1722. The first conduit 1721 may be formed to be inclined with respect to a lateral side of the sidewall 1711. The second conduit 1722 may be formed to be inclined with respect to the lateral side of the sidewall 1711. The first conduit 1721 and the second conduit 1722 may be formed through a CNC method, but the disclosure is not limited thereto.

According to an embodiment, the first conduit 1721 may be formed to extend from an outer side of the housing assembly 1710. The first conduit 1721 may be a passage (e.g., opening) that starts from a portion adjacent to the side exterior of the housing assembly 610 and extends in an inward direction. For example, the first conduit 1721 may be formed to pass through the sidewall 1711 and a portion of the internal structure 1712.

According to an embodiment, the second conduit 1722 may be formed to extend from an inner side of the housing assembly 1710. The second conduit 1722 may be a passage that starts from a portion adjacent to the side interior of the housing assembly 1710 and extends in an outward direction. For example, the second conduit 1722 may be formed to pass through a portion of the internal structure 1712.

According to an embodiment, the first conduit 1721 and the second conduit 1722 may be placed or arranged in a staggering manner so that only portions thereof overlap. The first conduit 1721 and the second conduit 1722 may extend in directions parallel to each other. For example, a horizontal position of the first conduit 1721 and a horizontal position of the second conduit 1722 may be different. For example, the first conduit 1721 may be positioned closer to the display 115 than the second conduit 1722.

By configuring a first hole (e.g., the first hole 650 of FIG. 9 or the first hole 1720 of FIG. 17) and a rib (e.g., the rib 6121 of FIG. 9 or the rib 1712a of FIG. 17), an electronic device (e.g., the electronic device 101 of FIG. 1, the electronic device 101 of FIG. 2) according to an embodiment may prevent an internal sealing member (e.g., the sealing member 670 of FIG. 9) from being identified based on view (e.g., observation) from the outside, thereby preventing mistaking the sealing member 670 for a foreign object.

By configuring the first hole 650, 1720 and the rib 6121, 1712a, the electronic device 101 according to an embodiment may prevent the user from incorrectly inserting a SIM pin (e.g., the SIM pin 1510 of FIG. 15) and damaging the sealing member 670 or a mesh member (e.g., the mesh member 680 of FIG. 9).

An electronic device 101 according to an embodiment may include a display 230, a housing assembly 610 including a sidewall 611 forming an outer side (e.g., surface) of the electronic device and an internal structure 612 integrally formed with the sidewall 611 and configured to support the display 230, and a rear plate 280 disposed on an opposite side of the display 230. The housing assembly 610 may include a hole 650 formed to pass through a portion of the internal structure 612 and a portion of the sidewall 611. The hole 650 may include a first conduit 651 formed to extend from an outer side of the sidewall 611 and a second conduit 652 formed to extend from an inner side of the housing assembly 610 and configured to communicate with the first conduit 651. The internal structure 612 may include a rib 6121 extending from an end of the first conduit 651 toward the second conduit 652. The rib 6121 may be formed such that at least a portion of internal components is not identifiable from an outer side of the sidewall 611.

According to an embodiment, a first horizontal path of the first conduit 651 may be positioned at a lower height than a second horizontal path of the second conduit 652 with respect to the display 230. The first horizontal path of the first conduit 651 may communicate with the second horizontal path of the second conduit 652 through at least a partially inclined path formed by an inclined side 6121a of the rib 6121. This staggered orientation provides a structural arrangement that enables the rib to obstruct the line of sight, while the inclined path provides a smooth, gradual transition for sound waves, thereby minimizing acoustic degradation and maintaining audio quality.

According to an embodiment, the rib 6121 may have an edge portion chamfered in a direction toward the second conduit 652. The chamfered edge on the rib prevents the sharp edge from damaging the internal mesh member in the event that it is pressed against the rib due to external impact, increasing the device's durability. Secondly, it facilitates the removal of fine cutting chips that can accumulate at edges during CNC manufacturing, which prevents these chips from contaminating and potentially damaging internal electronic components.

According to an embodiment, the second conduit 652 may be positioned between the rib 6121 and the rear plate 280. This feature further solidifies the overall structural arrangement of the sound channel. This ensures that the sound path from the internally-mounted speaker is properly directed into the second conduit and then guided past the rib towards the exterior opening, ensuring a functional acoustic path.

According to an embodiment, a speaker 640 disposed adjacent to the second conduit 652 and supported by the internal structure 612 may be included.

According to an embodiment, the sealing member 670 disposed between the speaker 640 and the second conduit 652 may be further included.

According to an embodiment, at least a portion of the sealing member 670 may be disposed to be hidden by the rib 6121 based on viewing the hole 650 from one side of the sidewall 611. This feature prevents a user from misinterpreting a functional internal component as a flaw. By physically obscuring the sealing member, the rib provides clear and unambiguous visual information to a user inspecting the hole, ensuring that a normal part of the device is not mistaken for a manufacturing defect or foreign matter. This provides reliable visual feedback about the device's condition to the user.

According to an embodiment, the electronic device 101 may further include the mesh member 680 coupled to the sealing member 670 and configured to prevent foreign objects or liquid flowing in from the hole 650 from entering the speaker 640. This feature provides a protective function. It acts as a physical barrier that prevents the ingress of foreign matter, such as dust and pocket lint, as well as liquids. This directly protects the delicate internal speaker from physical damage and short circuits, thereby increasing the overall durability, reliability, and lifespan of the electronic device.

According to an embodiment, the first conduit 651 and the second conduit 652 may each extend in a direction perpendicular to a lateral side of the sidewall 611. This orientation allows the hole to be formed using simple, linear cutting processes (e.g., CNC drilling) without the need for more complex and costly angled machining operations. This simplifies the manufacturing process, reducing both production time and cost.

According to an embodiment, the first conduit 651 and the second conduit 652 may each extend in a direction parallel to the display 115. This structural orientation is well-suited for thin, planar electronic devices. It aligns the sound channel with the main front and back surfaces of the device, ensuring that sound is emitted from the side in a predictable and efficient manner. This configuration allows for an effective sound channel to be integrated within the spatial constraints of a thin device profile.

According to an embodiment, the first conduit 651 and the second conduit 652 may extend in directions parallel to each other. This parallel arrangement is an aspect of the design that allows the intervening rib to effectively block the direct line of sight while maintaining a simple geometry that is straightforward to manufacture.

According to an embodiment, the first conduit 651 may be positioned closer to the display 115 than the second conduit 652. This specific arrangement allows the rib, which extends upward from the bottom surface of the first conduit's path, to be optimally positioned to obscure the view of the deeper second conduit and the internal components located behind it.

According to an embodiment, the first conduit 651 and the second conduit 652 may be formed through a CNC method.

According to an embodiment, the first conduit 651 and the second conduit 652 may each be formed to be inclined with respect to a lateral side of the sidewall 611.

According to an embodiment, an effective cross-sectional area of the first conduit 651 may be less than or equal to an effective cross-sectional area of the second conduit 652. This ensures that the sound path does not narrow as it moves deeper into the device. This prevents the creation of an acoustic bottleneck, which could otherwise constrict airflow and degrade speaker performance, thereby maintaining the intended sound quality and volume.

According to an embodiment, an effective cross-sectional area of the first conduit 651 may be less than or equal to an effective cross-sectional area of a portion where the first conduit 651 and the second conduit 652 overlap or are connected. This feature ensures that the transitionary space connecting the two conduits does not constrict the sound path. By maintaining a sufficiently large cross-sectional area at this junction, the design avoids acoustic impedance mismatches and pressure drops that could negatively affect sound quality, ensuring a smooth and efficient passage for the sound waves.

According to an embodiment, the height of the rib 6121 may be 0.6 mm or more.

To further prevent potentially misleading visual artifacts caused by light reflecting off the rib 6121, the surface of the rib, particularly the inclined side 6121a, may be provided with a reflection-reducing feature. This feature is configured to mitigate specular reflection of incident light that enters through the first conduit 651. This may be achieved, for example, either by absorbing a portion of the incident light or by scattering it. In one embodiment, the reflection-reducing feature comprises an anti-reflective layer (1210) coated on the surface. In another embodiment, the reflection-reducing feature comprises a textured surface (6121a-1) formed on the rib to induce diffuse reflection.

According to an embodiment, the electronic device 101 may further include an anti-reflection layer 1210 coated on a surface of the rib 6121. This feature physically reduces specular reflections of incident light. By absorbing a portion of the light, the layer minimizes glints and reflections that could be presented to a user looking into the hole. This addresses the problem of misleading visual artifacts, ensuring the user is not confused by reflections that could be misinterpreted as foreign objects or moisture within the device.

According to an embodiment, at least a portion of the surface of the rib 6121 may be textured to induce light scattering. This feature induces diffuse reflection, thereby scattering incident light. This physical mechanism prevents specular reflection, where light bounces directly back to an observer. The advantage is that it eliminates potentially confusing visual artifacts, such as glints of light, addressing the technical problem of providing clear and non-misleading visual feedback to a user inspecting the opening.

According to an embodiment, based on viewing from an outer side of the hole 650, a portion of a plane perpendicular to an extension direction of the first conduit 651 may overlap a portion of a plane perpendicular to an extension direction of the second conduit 652.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (230);
a housing assembly (610) including a sidewall (611) forming an exterior surface of the electronic device and an internal structure (612) integrally formed with or fixed to the sidewall (611) and configured to support the display (230); and
a rear plate (280) disposed on an opposite side of the display (230),
wherein the housing assembly (610) includes a hole (650) formed to pass through a portion of the internal structure (612) and a portion of the sidewall (611),
wherein the hole (650) includes:
a first conduit (651) formed to extend from an outer side of the sidewall (611); and
a second conduit (652) formed to extend from an inner side of the housing assembly (610) and configured to communicate with the first conduit (651),
wherein the internal structure (612) includes a rib (6121) extending from an inner end of the first conduit (651) toward the second conduit (652), and
wherein the rib (6121) is positioned to obstruct a direct line of sight through the hole (650) from the outer side of the sidewall (611).

2. The electronic device of claim 1,
wherein a first horizontal path of the first conduit (651) is positioned at a lower height than a second horizontal path of the second conduit (652) with respect to the display (230), and
wherein the first horizontal path of the first conduit (651) is in communication with the second horizontal path of the second conduit (652) through at least a partially inclined path formed by an inclined side (6121a) of the rib (6121).

3. The electronic device of claim 1 or 2, wherein the rib (6121) has an edge portion facing toward the second conduit (652) side that is chamfered.

4. The electronic device of any one of claims 1 to 3, wherein the second conduit (652) is positioned between the rib (6121) and the rear plate (280).

5. The electronic device of any one of claims 1 to 4, further comprising a speaker (640) disposed adjacent to the second conduit (652) and supported by the internal structure (612), and a sealing member (670) disposed between the speaker (640) and the second conduit (652),
wherein at least a portion of the sealing member (670) is disposed to be hidden by the rib (6121) in case the hole (650) is viewed from the outer side of the sidewall (611).

6. The electronic device of claim 5, further comprising a mesh member (680) coupled to the sealing member (670) and configured to prevent foreign substances or liquids entering from the hole (650) from entering the speaker (640).

7. The electronic device of any one of claims 1 to 6, wherein the first conduit (651) and the second conduit (652) each extend in a direction perpendicular to a lateral side of the sidewall (611).

8. The electronic device of any one of claims 1 to 7, wherein the first conduit (651) and the second conduit (652) each extend in a direction parallel to the display (230).

9. The electronic device of any one of claims 1 to 8, wherein the first conduit (651) and the second conduit (652) extend in mutually parallel directions.

10. The electronic device of any one of claims 1 to 9, wherein the first conduit (651) is positioned closer to the display (230) than the second conduit (652).

11. The electronic device of any one of claims 1 to 10, wherein an effective cross-sectional area of the first conduit (651) is less than or equal to an effective cross-sectional area of the second conduit (652).

12. The electronic device of any one of claims 1 to 13, wherein an effective cross-sectional area of the first conduit (651) is less than or equal to an effective cross-sectional area of a portion where the first conduit (651) and the second conduit (652) overlap or connect.

13. The electronic device of any one of claims 1 to 12, further comprising an anti-reflective layer (1210) coated on a surface of the rib (6121).

14. The electronic device of any one of claims 1 to 13, wherein at least a portion of a surface of the rib (6121) is textured to induce scattering of light.

15. The electronic device of any one of claims 1 to 14, wherein based on viewing from an outer side of the hole (650), a portion of a plane perpendicular to an extending direction of the first conduit (651) overlaps with a portion of a plane perpendicular to an extending direction of the second conduit (652).
